# EUROPEAN PATENT APPLICATION

(11) **EP 2 827 073 A1**
(43) Date of publication of application: **21.01.2015**
(21) Application number: 13761056.4
(22) Date of filing: 13.03.2013
(51) Int. Cl.: F24F 6/00, B01D 53/22, B01D 63/00, B01D 63/02, F24F 6/04, H01M 8/04, H01M 8/10

(54) **HUMIDIFIER**

(30) Priority: 13.03.2012 JP 2012056377
(71) Applicant: Nissan Motor Co., Ltd, Yokohama-shi, Kanagawa 221-0023 (JP)
(72) Inventor: USUDA, Masahiro, Atsugi-shi Kanagawa 243-0123 (JP); YAZAWA, Shigenori, Atsugi-shi Kanagawa 243-0123 (JP)
(74) Representative: Grünecker, Kinkeldey, Stockmair & Schwanhäusser
(86) International application number: PCT/JP2013/056998
(87) International publication number: WO 2013/137310

(57) **Abstract**

A water recovery device that allows a first gas to flow inside hollow fiber membranes and a second gas to flow outside the hollow fiber membranes, and that exchanges moisture between the first gas and the second gas. The water recovery device includes: a hollow fiber membrane bundle in which plural pieces of the hollow fiber membranes are bundled; a storage case that is open at both ends and houses the hollow fiber membrane bundle thereinside; a housing that includes an introduction hole and a discharge hole of the first gas and an introduction hole and a discharge hole of the second gas, and houses the storage case thereinside; a storage case seal groove which is formed on an outer peripheral surface of one end side of the storage case and to which a seal member is attached for sealing a gap between the outer peripheral surface of one end side of the storage case and an inner peripheral surface of the housing; and a housing seal groove which is formed on the inner peripheral surface of the housing and to which a seal member is attached for sealing a gap between the inner peripheral surface of the housing and an outer peripheral surface of the other end side of the storage case.

## Description

### TECHNICAL FIELD

The present invention relates to a water recovery device.

### BACKGROUND ART

JP2010-71618A discloses a conventional water recovery device that causes first gas and second gas to flow inside and outside a hollow fiber membrane, respectively, and performs moisture exchange between the first gas and the second gas.

### SUMMARY OF INVENTION

According to the foregoing conventional water recovery device, a seal groove is formed in both end portions of a storage case that accommodates a hollow fiber membrane bundle, that is, a bundle of a plurality of hollow fiber membranes. The seal groove is for sealing a gap with a housing that accommodates the storage case. Therefore, at the time of inserting the storage case inside the housing, a seal member (O ring) provided in the seal groove on the insertion side comes into contact with an inner wall surface of the housing. As a result, the seal member provided in the seal groove on the insertion side undesirably causes a load against the insertion direction (hereinafter referred to as "insertion load") to act on the storage case.

The present invention has been made with a focus on the foregoing problem, and aims to reduce an insertion load acting on a storage case at the time of inserting the storage case inside a housing.

### SOLUTION TO PROBLEM

According to one aspect of the present invention, a water recovery device is provided that allows a first gas to flow inside hollow fiber membranes and a second gas to flow outside the hollow fiber membranes, and that exchanges moisture between the first gas and the second gas. The water recovery device includes: a hollow fiber membrane bundle in which plural pieces of the hollow fiber membranes are bundled; a storage case that is open at both ends and houses the hollow fiber membrane bundle thereinside; a housing that includes an introduction hole and a discharge hole of the first gas and an introduction hole and a discharge hole of the second gas, and houses the storage case thereinside; a storage case seal groove which is formed on an outer peripheral surface of one end side of the storage case and to which a seal member is attached for sealing a gap between the outer peripheral surface of one end side of the storage case and an inner peripheral surface of the housing; and a housing seal groove which is formed on the inner peripheral surface of the housing and to which a seal member is attached for sealing a gap between the inner peripheral surface of the housing and an outer peripheral surface of the other end side of the storage case.

Embodiments and advantages of the present invention will be described in detail below with reference to the attached drawings.

### BRIEF DESCRIPTION OF DRAWINGS

Fig. 1 schematically shows a configuration of a fuel cell system.
Fig. 2 is a perspective view of a water recovery device according to a first embodiment of the present invention.
Fig. 3 is an exploded perspective view of the water recovery device according to the first embodiment of the present invention.
Fig. 4 is an explanatory diagram showing a hollow fiber membrane.
Fig. 5 shows a cross section of the water recovery device in Fig. 2 taken along the line V-V.
Fig. 6 shows a cross section of the water recovery device in Fig. 2 taken along the line VI-VI.
Fig. 7 shows a cross section of the water recovery device in Fig. 2 taken along the line VII-VII.
Fig. 8 shows the flow of cathode off-gas inside a central body.
Fig. 9 shows a cross section of the water recovery device in Fig. 8 taken along the line IX-IX.
Fig. 10 is an explanatory diagram showing the effects of the water recovery device according to the first embodiment of the present invention.
Fig. 11 shows a vertical cross section of a water recovery device according to a second embodiment of the present invention.
Fig. 12 shows a transverse cross section of the water recovery device according to the second embodiment of the present invention.
Fig. 13A is an explanatory diagram showing the effects of the water recovery device according to the second embodiment of the present invention.
Fig. 13B shows a transverse cross section of the water recovery device according to the first embodiment of the present invention.
Fig. 14 shows a reference mode.

### DESCRIPTION OF EMBODIMENTS

### (First Embodiment)

A fuel cell includes an electrolyte membrane interposed between an anode electrode (fuel electrode) and a cathode electrode (oxidant electrode), and generates power by supplying anode gas (fuel gas) containing hydrogen to the anode electrode and cathode gas (oxidant gas) containing oxygen to the cathode electrode. The following electrode reactions proceed in the anode electrode and the cathode electrode.

Anode Electrode: 2H₂ → 4H⁺ + 4e⁻ (1)

Cathode Electrode: 4H⁺ + 4e⁻ + O₂ → 2H₂O (2)

The fuel cell generates an electromotive force of approximately one volt by these electrode reactions (1) and (2).

When the above-described fuel cell is used as a power source for an automobile, a fuel cell stack made by stacking a few hundred fuel cells is used to supply a large amount of power required. In this case, a fuel cell system for supplying anode gas and cathode gas to the fuel cell stack is configured, and power for driving a vehicle is drawn therefrom.

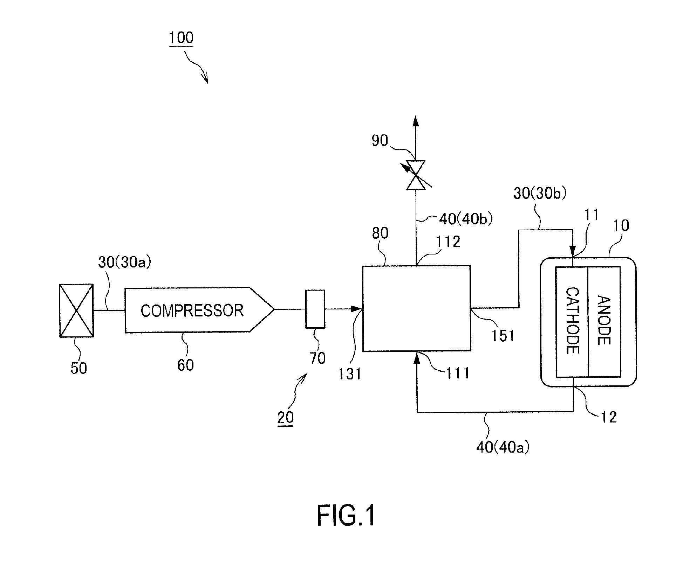

Fig. 1 schematically shows a configuration of a fuel cell system 100.

The fuel cell system 100 includes a fuel cell stack 10 and a cathode gas supply/discharge device 20.

The fuel cell stack 10 is made by stacking a plurality of fuel cells. With anode gas and cathode gas supplied to the fuel cell stack 10, the fuel cell stack 10 generates power required to drive the vehicle (for example, power required to drive a motor).

It should be noted that an anode gas supply/discharge device for supplying anode gas to the fuel cell stack 10, and a cooling device for cooling the fuel cell stack 10, do not serve as main components in the present invention, and are thus omitted from the drawings to facilitate the understanding.

The cathode gas supply/discharge device 20 is a device for supplying cathode gas to the fuel cell stack 10 and for discharging cathode off-gas discharged from the fuel cell stack 10 to the outer air. The cathode gas supply/discharge device 20 includes a cathode gas supply passage 30, a cathode gas discharge passage 40, a filter 50, a cathode compressor 60, an airflow sensor 70, a water recovery device (WRD) 80, and a cathode pressure regulator valve 90.

The cathode gas supply passage 30 is a passage in which cathode gas flows to be supplied to the fuel cell stack 10. Hereinafter, where it is necessary to make a particular distinction, a part of the cathode gas supply passage 30 that is connected to the filter 50 at one end and is connected to a cathode gas introduction hole 131 of the water recovery device 80 at the other end will be referred to as "cathode gas supply passage 30a". On the other hand, a part of the cathode supply passage that is connected to a cathode gas discharge hole 151 of the water recovery device 80 at one end and is connected to a cathode gas inlet hole 11 of the fuel cell stack 10 at the other end will be referred to as "cathode gas supply passage 30b".

The cathode gas discharge passage 40 is a passage in which cathode off-gas discharged from the fuel cell stack 10 flows. Cathode off-gas is a mixed gas containing cathode gas and water vapor generated by electrode reactions. Hereinafter, where it is necessary to make a particular distinction, a part of the cathode gas discharge passage 40 that is connected to a cathode gas outlet hole 12 of the fuel cell stack 10 at one end and is connected to a cathode off-gas introduction hole 111 of the water recovery device 80 at the other end will be referred to as "cathode gas discharge passage 40a". On the other hand, a part of the cathode gas discharge passage 40 that is connected to a cathode off-gas discharge hole 112 of the water recovery device 80 at one end and is open at the other end will be referred to as "cathode gas discharge passage 40b".

The filter 50 removes foreign substances in cathode gas that is to be introduced into the cathode gas supply passage 30.

The cathode compressor 60 is provided to the cathode gas supply passage 30a. The cathode compressor 60 introduces the air (outer air) as cathode gas into the cathode gas supply passage 30 via the filter 50, and supplies the same to the fuel cell stack 10.

The airflow sensor 70 is provided to the cathode gas supply passage 30 such that it is positioned downstream relative to the cathode compressor 60. The airflow sensor 70 detects the flow rate of cathode gas flowing in the cathode gas supply passage 30a.

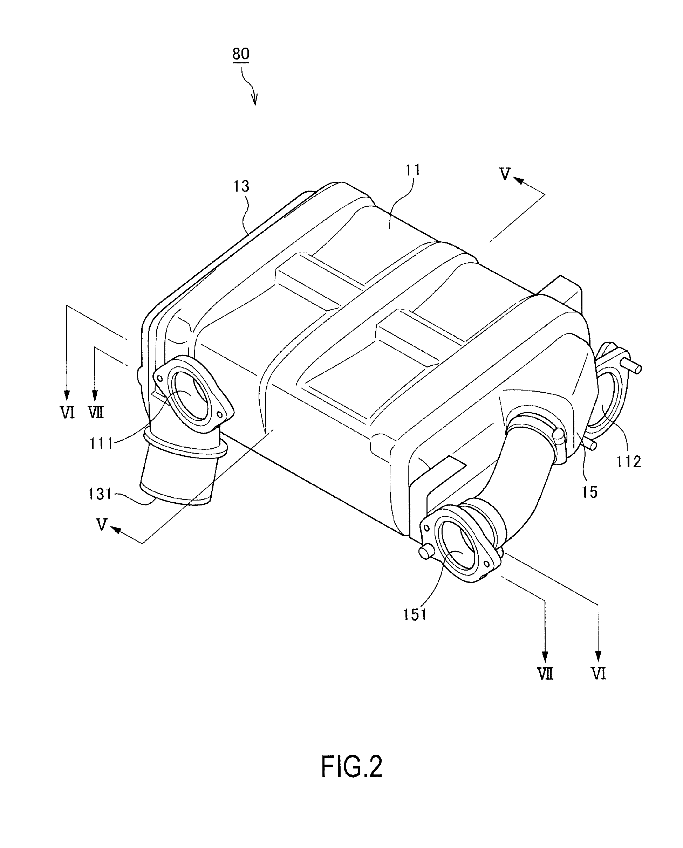

The water recovery device 80 is connected to both of the cathode gas supply passage 30 and the cathode gas discharge passage 40, recovers moisture in cathode off-gas that flows in the cathode gas discharge passage 40, and humidifies cathode gas that flows in the cathode gas supply passage 30 with the recovered moisture. As the water recovery device 80 humidifies cathode gas supplied to the fuel cell stack 10, the electrolyte membrane of the fuel cell can be suppressed from becoming dry, and the proton transfer resistance can be reduced. In this way, the output performance (power generation efficiency) of the fuel cell can be improved. A detailed configuration of the water recovery device 80 will be described later with reference to Figs. 2 to 7.

The cathode pressure regulator valve 90 is provided to the cathode gas discharge passage 40b. The cathode pressure regulator valve 90 is an electromagnetic valve capable of regulating an opening degree continuously or in a stepwise manner. By regulating the opening degree of the cathode pressure regulator valve 90, the pressure of cathode gas supplied to the fuel cell stack 10 is regulated to a desired pressure.

A description is now given of the configuration of the water recovery device 80 according to a first embodiment of the present invention with reference to Figs. 2 to 7.

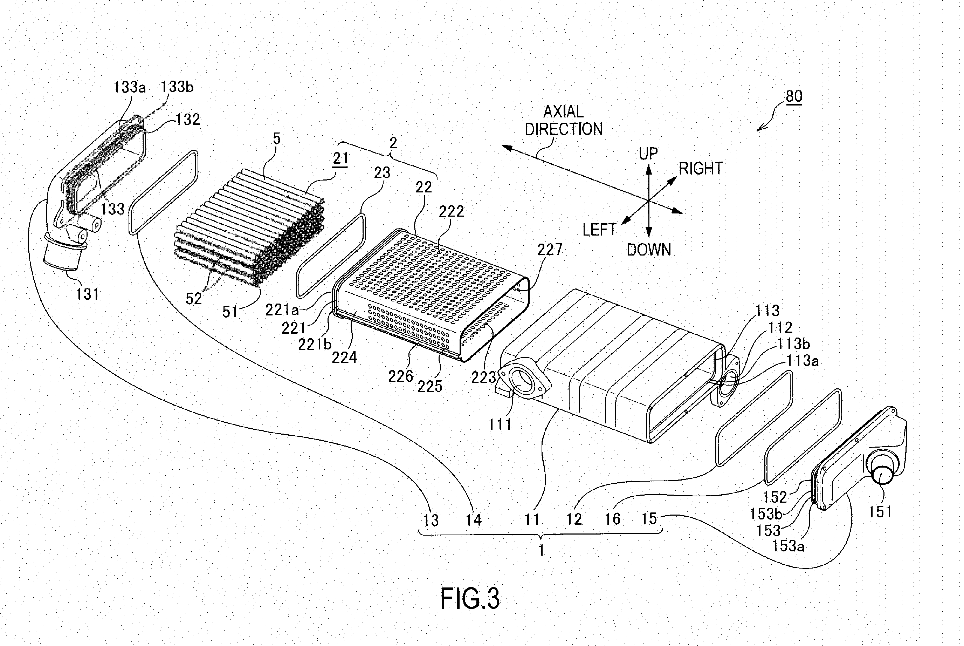

Fig. 2 is a perspective view of the water recovery device 80. Fig. 3 is an exploded perspective view of the water recovery device 80.

The water recovery device 80 includes a housing 1 and a hollow fiber membrane module 2.

The housing 1 includes a central body 11, a central body O ring 12, a first closing body 13, a first closing body O ring 14, a second closing body 15, and a second closing body O ring 16. The housing 1 has the following functions: protecting the hollow fiber membrane module 2 accommodated thereinside; introducing, to the inside of the housing 1, cathode gas and cathode off-gas that are to be supplied to the hollow fiber membrane module 2; and discharging, to the outside of the housing 1, the cathode gas and cathode off-gas that have been supplied to the hollow fiber membrane module 2. The foregoing components of the housing 1 will now be described.

The central body 11 is a flat metallic case that is open at both ends. The central body 11 accommodates the hollow fiber membrane module 2 thereinside. Hereinafter, a direction orthogonal to planes of openings at both ends of the central body will be referred to as "axial direction". The plane of the opening of the central body 11 on the second closing body side is regarded as a front. Accordingly, up, down, left, and right are defined as follows: the upper side of the figure is up, the lower side of the figure is down, the front side of the figure is left, and the back side of the figure is right.

The cathode off-gas introduction hole 111 is formed in a left side wall of the central body 11. The cathode off-gas introduction hole 111 is connected to the cathode gas discharge passage 40a. The cathode off-gas introduction hole 111 introduces cathode off-gas that has been discharged from the fuel cell stack 10 and flowed in the cathode gas discharge passage 40a to the inside of the central body 11.

The cathode off-gas discharge hole 112 is formed in a right side wall of the central body 11. The cathode off-gas discharge hole 112 is connected to the cathode gas discharge passage 40b. The cathode off-gas discharge hole 112 discharges, to the cathode gas discharge passage 40b, cathode off-gas which has been introduced to the inside of the central body 11 and from which moisture has been recovered by the hollow fiber membrane module 2.

A central body seal groove 113 is formed on an inner wall surface of the other end portion of the central body 11 (the end portion on the second closing body side) along the entire periphery. The central body seal groove 113 is a groove that is formed between two annular projections 113a, 113b that project perpendicularly from the inner wall surface of the central body 11.

The central body O ring 12 is fit in the central body seal groove 113. The central body O ring 12 seals a gap between the inner wall surface of the central body 11 and an outer wall surface of a storage case 22 accommodated inside the central body 11.

The first closing body 13, which is a metallic cover that closes one opening of the central body 11, is fastened to the central body 11 by, for example, a bolt. The first closing body 13 includes the cathode gas introduction hole 131 and an opening portion 132.

The cathode gas introduction hole 131 is connected to the cathode gas supply passage 30a. The cathode gas introduction hole 131 introduces cathode gas ejected from the compressor to the inside of the first closing body 13. The cathode gas introduced to the inside of the first closing body 13 is introduced to the inside of the central body 11 from one opening of the central body 11 via the opening portion 132.

When the first closing body 13 has been fastened to the central body 11, the opening portion 132 is inserted inside the central body 11. A first closing body seal groove 133 is formed on an outer peripheral surface of the opening portion 132 along the entire periphery. The first closing body seal groove 133 is a groove that is formed between two annular projections 133a, 133b that project perpendicularly from the outer peripheral surface of the opening portion 132.

The first closing body O ring 14 is fit in the first closing body seal groove 133. The first closing body O ring 14 seals a gap between the outer peripheral surface of the opening portion 132 of the first closing body 13 and the inner wall surface of the central body 11.

The second closing body 15, which is a metallic cover that closes the other opening of the central body 11, is fastened to the central body 11 by, for example, a bolt. The second closing body 15 includes the cathode gas discharge hole 151 and an opening portion 152.

The cathode gas discharge hole 151 is connected to the cathode gas supply passage 30b. The cathode gas discharge hole 151 discharges, to the cathode gas supply passage 30b, cathode gas that has been humidified by the hollow fiber membrane module 2 and discharged from the other opening of the central body 11 to the inside of the second closing body 15. The cathode gas discharged to the cathode gas supply passage 30b is supplied to the fuel cell stack 10 via the cathode gas supply passage 30b.

When the second closing body 15 has been fastened to the central body 11, the opening portion 152 is inserted inside the central body 11. A second closing body seal groove 153 is formed on an outer peripheral surface of the opening portion 152 along the entire periphery. The second closing body seal groove 153 is a groove that is formed between two annular projections 153a, 153b that project perpendicularly from the outer peripheral surface of the opening portion 152.

The second closing body O ring 16 is fit in the second closing body seal groove 153. The second closing body O ring 16 seals a gap between the outer peripheral surface of the opening portion 152 of the second closing body 15 and the inner wall surface of the central body 11.

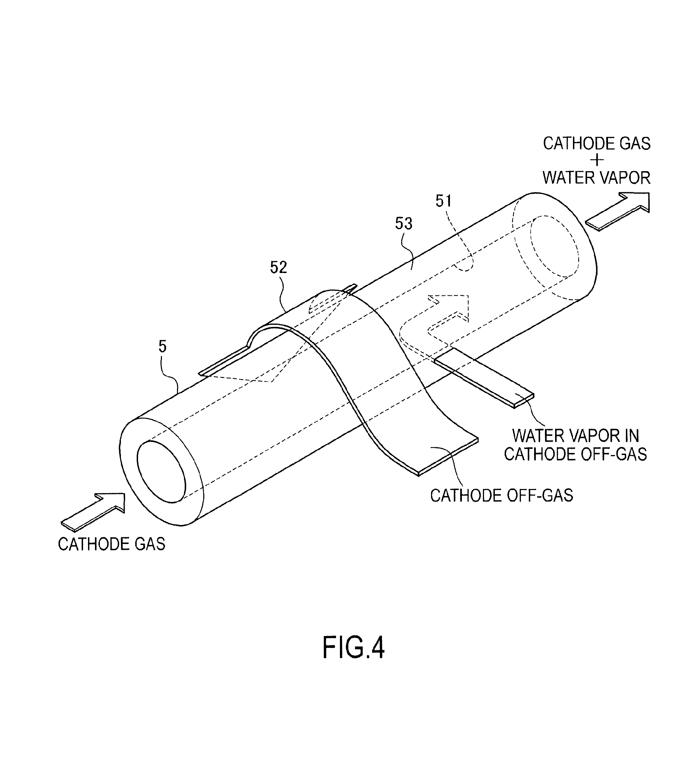

The hollow fiber membrane module 2 includes a hollow fiber membrane bundle 21, the storage case 22, and a storage case O ring 23. Before explaining the components of the hollow fiber membrane module 2, a hollow fiber membrane 5 will be described first with reference to Fig. 4.

Fig. 4 is an explanatory diagram showing the hollow fiber membrane 5.

As shown in Fig. 4, the hollow fiber membrane 5 is a hollow membrane with moisture permeability, has openings in both end surfaces thereof, and has an internal flow channel 51 via which the openings in both end surfaces thereof communicate with each other. The hollow fiber membrane 5 performs moisture exchange between internal gas that flows in the internal flow channel 51 and external gas that flows while in contact with an outer peripheral surface 53 of the hollow fiber membrane 5 in accordance with a water vapor partial pressure difference between the internal gas and the external gas.

In the present embodiment, cathode gas and cathode off-gas serve as the internal gas and the external gas, respectively, and the cathode gas is humidified by causing water vapor in the cathode off-gas to permeate into the internal flow channel 51 of the hollow fiber membrane 5.

Referring back to Fig. 3, the following describes the components of the hollow fiber membrane module 2.

The hollow fiber membrane bundle 21 is formed as follows. First, a plurality of hollow fiber membranes 5 are bundled. Then, the hollow fiber membranes are integrally bonded to one another by filling minute spaces between the hollow fiber membranes with a potting material at both end portions of the hollow fiber membrane bundle 21. In portions of the hollow fiber membrane bundle 21 other than the both end portions, the hollow fiber membranes are not bonded to one another by the potting material, and therefore minute spaces still exist between the hollow fiber membranes. These minute spaces existing between the hollow fiber membranes serve as flow channels 52 in which the aforementioned external gas flows (hereinafter referred to as "external flow channels"). The hollow fiber membrane bundle 21 humidifies cathode gas flowing in the internal flow channels 51 of the hollow fiber membranes 5 by causing water vapor in cathode off-gas flowing in the external flow channels 52 to permeate into the internal flow channels 51.

The storage case 22 is a flat resin case that is open at both ends, and accommodates the hollow fiber membrane bundle 21 thereinside such that a longitudinal direction of the hollow fiber membrane bundle 21 is parallel to the axial direction.

A storage case seal groove 221 is formed in a side wall of one end portion of the storage case 22 (the end portion on the first closing body side) along the entire periphery. The storage case seal groove 221 is a groove that is formed between two annular projections 221a, 221b that project perpendicularly from the side wall of the storage case 22.

The storage case O ring 23 is fit in the storage case seal groove 221. The storage case O ring 23 seals a gap between the side wall of the storage case 22 and the inner wall surface of the central body 11.

The storage case 22 also has a function of causing cathode off-gas to flow into the external flow channels 52 of the hollow fiber membrane bundle 21 from portions of the side wall of the storage case 22 (an upper side wall, a right side wall, and a left side wall), and causing the cathode off-gas that has flowed into the external flow channels 52 to flow out from a remaining portion of the side wall of the storage case 22 (a lower side wall). A configuration for achieving this function will now be described with reference to Fig. 3 and Figs. 5 to 7.

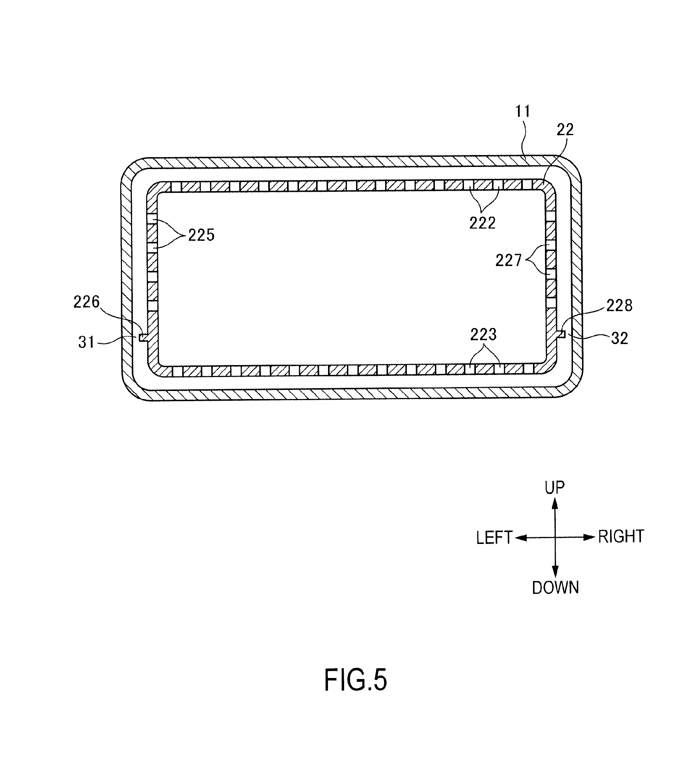

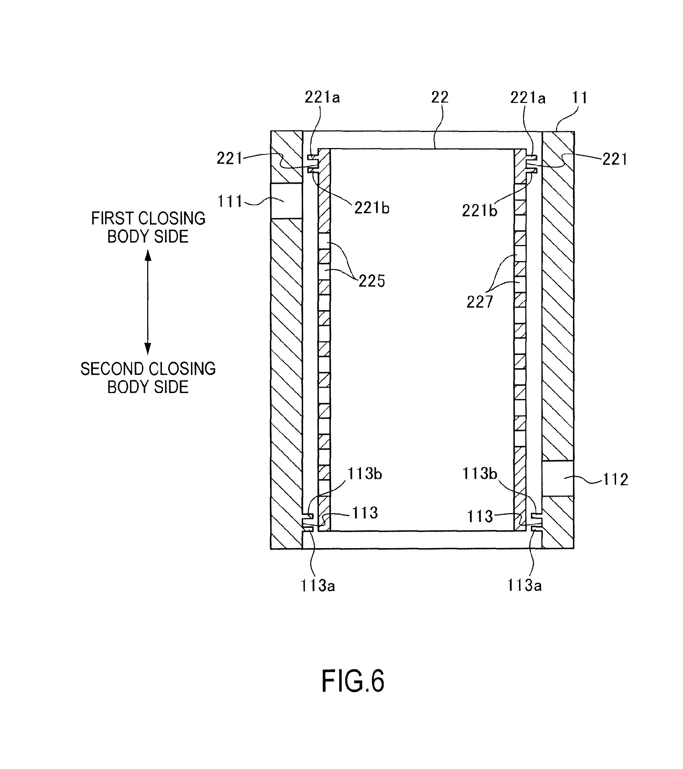

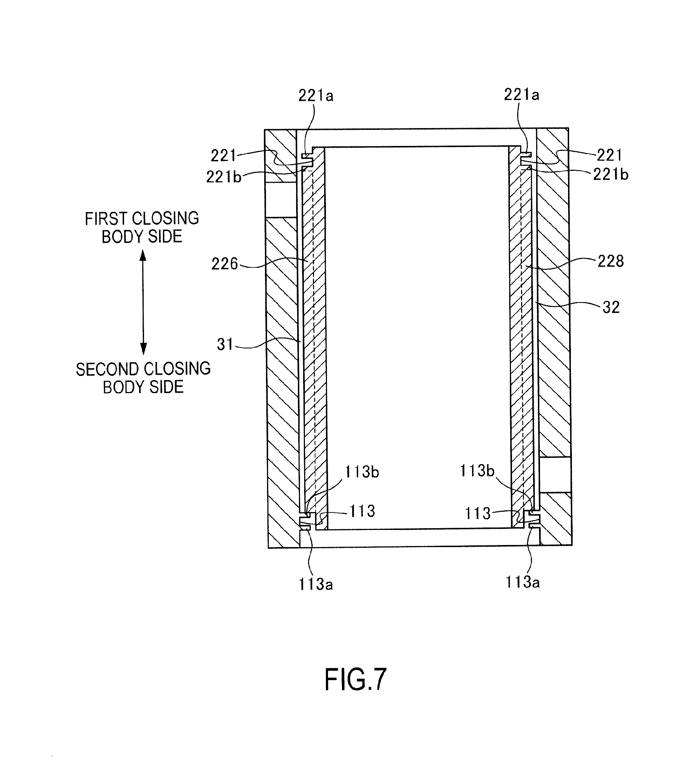

Fig. 5 shows a cross section of the water recovery device in Fig. 2 taken along the line V-V. Fig. 6 shows a cross section of the water recovery device in Fig. 2 taken along the line VI-VI. Fig. 7 shows a cross section of the water recovery device in Fig. 2 taken along the line VII-VII. Figs. 6 and 7 differ from each other in that Fig. 7 shows a cross section of a portion that includes a left bypass rib 226 and a right bypass rib 228, which will be described later. It should be noted that the hollow fiber membrane bundle 21 is omitted from Figs. 5 to 7.

Upper gas inflow holes 222 are formed in the upper side wall of the storage case 22.

The upper gas inflow holes 222 are a plurality of holes that are formed substantially across the entire upper side wall so as to penetrate through the upper side wall. Cathode off-gas that has been introduced to the inside of the central body 11 from the cathode off-gas introduction hole 111 formed in the left side wall of the central body 11 flows into the external flow channels 52 of the hollow fiber membrane bundle 21 mainly from the upper gas inflow holes 222.

Gas discharge holes 223 are formed in the lower side wall of the storage case 22.

The gas discharge holes 223 are a plurality of holes that are formed substantially across the entire lower side wall so as to penetrate through the lower side wall. Cathode off-gas that has flowed into the external flow channels 52 of the hollow fiber membrane bundle 21 is discharged to the inside of the central body 11 from the gas discharge holes 223. Thereafter, the discharged cathode off-gas is discharged to the cathode off-gas discharge passage 40b from the cathode off-gas discharge hole 112 formed in the right side wall of the central body 11.

A diffusion wall 224, left gas inflow holes 225, and the left bypass rib 226 are formed in the left side wall of the storage case 22.

The diffusion wall 224 is formed in a position that opposes the cathode off-gas introduction hole 111 formed in the central body 11 when the hollow fiber membrane module 2 is accommodated inside the central body 11. Cathode off-gas that has been introduced to the inside of the central body 11 from the cathode off-gas introduction hole 111 diffuses by colliding with the diffusion wall 224.

The left gas inflow holes 225 are a plurality of holes that are formed substantially across the entire left side wall, except for a region where the diffusion wall 224 is formed, so as to penetrate through the left side wall. Cathode off-gas that has been introduced to the inside of the central body 11 flows into the external flow channels 52 of the hollow fiber membrane bundle 21 not only from the upper gas inflow holes 222, but also from these left gas inflow holes 225.

The left bypass rib 226 is a projection that projects perpendicularly from a lower side of an outer peripheral surface of the left side wall and extends along the axial direction. The left bypass rib 226 is formed such that a predetermined gap (hereinafter referred to as "left bypass space") 31 is present between the left bypass rib 226 and an inner peripheral surface of the central body 11.

As shown in Fig. 7, the length of the left bypass rib 226 in the axial direction is set such that, when the hollow fiber membrane module 2 is accommodated inside the central body 11, it fits between the inner annular projection 221b (on the second closing body side) formed on the storage case 22 and the inner annular projection 113b (on the first closing body side) formed on the inner wall surface of the central body 11. The height of the left bypass rib 226 is set such that it is smaller than or equal to the height the annular projections 221a, 221b formed on one end portion of the storage case 22. In the present embodiment, the height of the left bypass rib 226 is equal to the height of the annular projections 221a, 221b.

Right gas inflow holes 227 and the right bypass rib 228 are formed in the right side wall of the storage case 22.

The right gas inflow holes 227 are a plurality of holes that are formed substantially across the entire right side wall so as to penetrate through the right side wall. Cathode off-gas that has been introduced to the inside of the central body 11 flows into the external flow channels 52 of the hollow fiber membrane bundle 21 not only from the upper gas inflow holes 222, but also from these right gas inflow holes 227.

The right bypass rib 228 is a projection that projects perpendicularly from a lower side of an outer peripheral surface of the right side wall and extends along the axial direction. The right bypass rib 228 is formed such that a predetermined gap (hereinafter referred to as "right bypass space") 32 is present between the right bypass rib 228 and the inner peripheral surface of the central body 11.

As shown in Fig. 7, the length of the right bypass rib 228 in the axial direction is set such that, when the hollow fiber membrane module 2 is accommodated inside the central body 11, it fits between the inner annular projection 221b formed on the storage case 22 and the inner annular projection 113b formed on the inner wall surface of the central body 11. The height of the right bypass rib 228 is set such that it is smaller than or equal to the height of the annular projections 221a, 221b formed on one end portion of the storage case 22. In the present embodiment, the height of the right bypass rib 228 is equal to the height of the annular projections 221a, 221b.

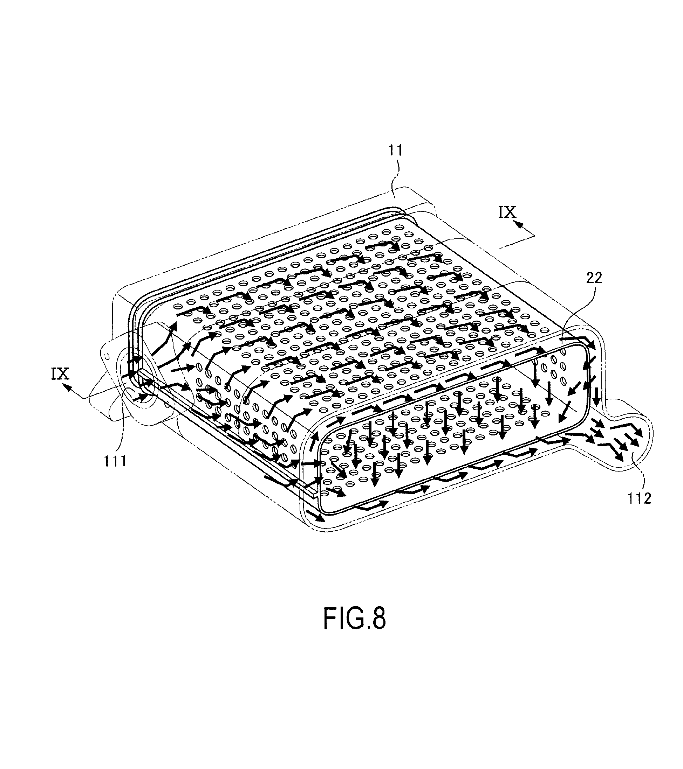

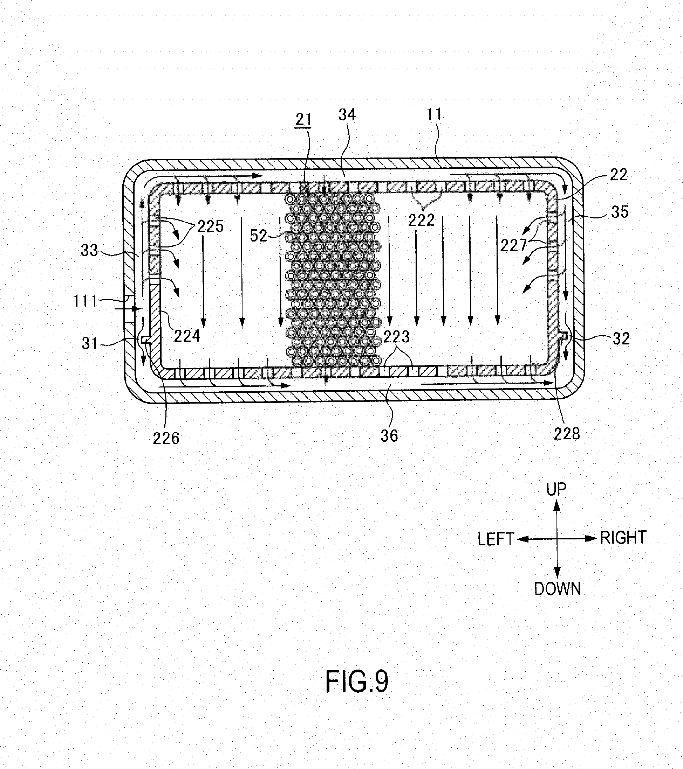

A description is now given of the flow of cathode off-gas inside the central body 11 with reference to Figs. 8 and 9.

Fig. 8 shows the flow of cathode off-gas inside the central body. Fig. 9 shows a cross section taken along the line IX-IX of Fig. 8. Arrows of Figs. 8 and 9 indicate the flow of cathode off-gas. In Fig. 9, only a portion of the hollow fiber membrane bundle 21 is illustrated.

As shown in Figs. 8 and 9, when the hollow fiber membrane module 2 is accommodated inside the central body 11, a predetermined gap is present between the central body 11 and the storage case 22.

Cathode off-gas that has been introduced from the cathode off-gas introduction hole 111 of the central body 11 to the inside of the central body 11 (the gap between the central body 11 and the storage case 22) diffuses by colliding with the diffusion wall 224 constituting the left side wall. Then, a part of the cathode off-gas flows in gaps 33, 34, 35 between the central body 11 and the left side wall, the upper side wall, and the right side wall of the storage case 22, and flows into the external flow channels 52 of the hollow fiber membrane bundle 21 from the left gas inflow holes 225, the upper gas inflow holes 222, and the right gas inflow holes 227 of the storage case 22.

On the other hand, a remaining part of the cathode off-gas flows into a gap 36 between the central body 11 and the lower side wall of the storage case 22 through the left bypass space 31 and the right bypass space 32, and then is discharged from the cathode off-gas discharge hole 112 without flowing into the external flow channels 52 of the hollow fiber membrane bundle 21.

The flow rate of the cathode off-gas flowing in the left bypass space 31 and the right bypass space 32 can be controlled by adjusting the height of the left bypass rib 226 and the right bypass rib 228. In other words, the flow rate of the cathode off-gas flowing from the gas inflow holes 222, 225, 227 of the storage case 22 into the external flow channels 52 of the hollow fiber membrane bundle 21, the flow direction and the flow velocity of the cathode off-gas that has flowed into the external flow channels 52, and the like can be controlled by adjusting the height of the left bypass rib 226 and the right bypass rib 228.

In the present embodiment, as shown in Figs. 8 and 9, the cathode off-gas that has flowed from the gas inflow holes 222, 225, 227 of the storage case 22 into the external flow channels 52 of the hollow fiber membrane bundle 21 flows evenly from the entire upper side wall, and perpendicularly from the upper side wall toward the lower side wall at an equal flow velocity.

The cathode off-gas that has flowed in the external flow channels 52 of the hollow fiber membrane bundle 21 from the upper side wall toward the lower side wall of the storage case is discharged from the gas discharge holes 223 in the lower side wall to the gap 36 between the central body 11 and the lower side wall of the storage case 22, and then discharged from the cathode off-gas discharge hole 112 together with the cathode off-gas that has passed through the left bypass space 31 and the right bypass space 32.

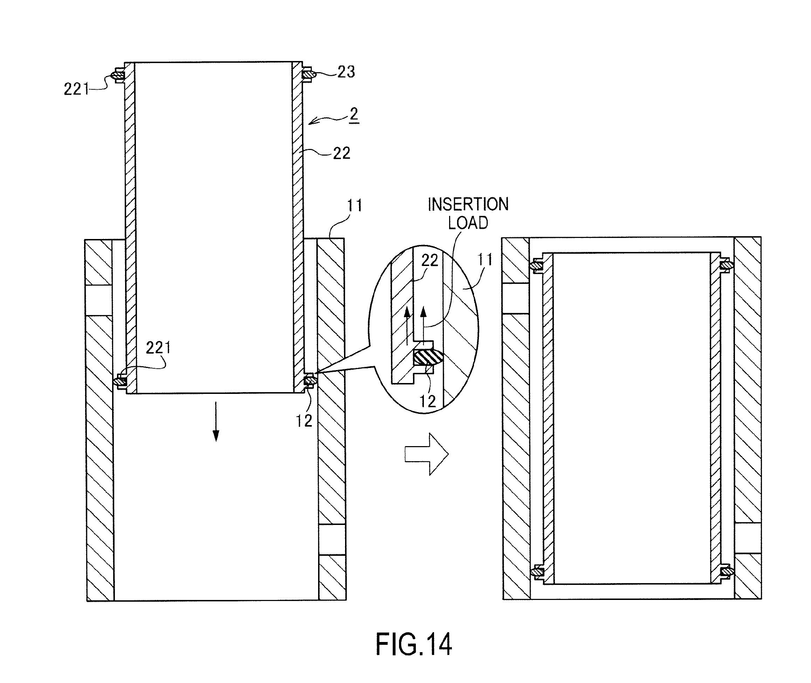

Next, a description is given of the effects of the water recovery device 80 according to the present embodiment. In order to facilitate the understanding of the invention, the following description will be given in comparison to a reference mode shown in Fig. 14. In the reference mode, the elements that are similar to those of the water recovery device 80 according to the present embodiment in terms of function are given the same reference signs thereas, and redundant descriptions are omitted as appropriate.

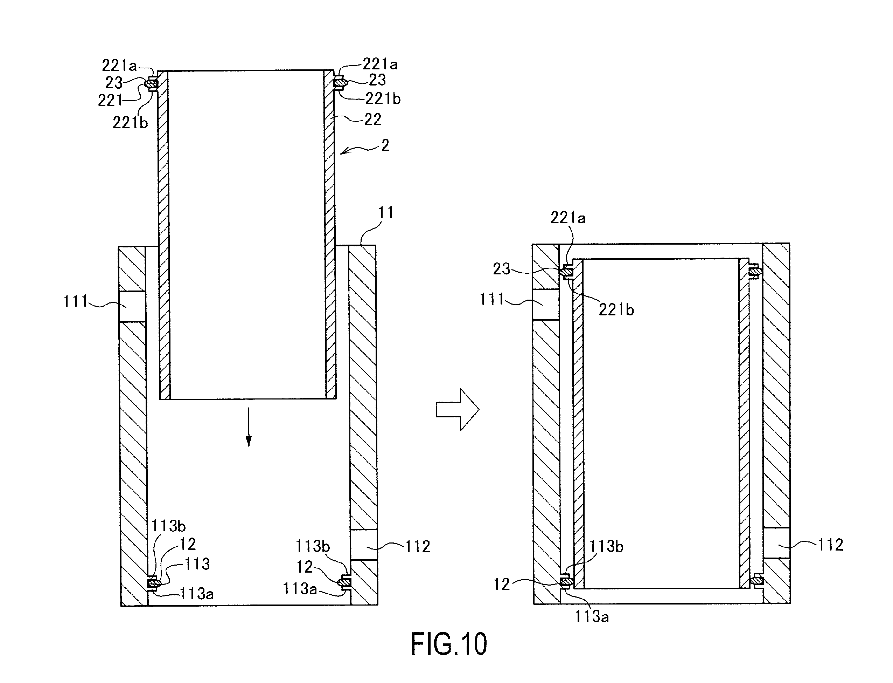

Fig. 10 is an explanatory diagram showing the effects of the water recovery device 80 according to the present embodiment. Specifically, Fig. 10 is a schematic diagram showing how the hollow fiber membrane module 2 is accommodated inside the central body 11.

As shown in Fig. 10, in the present embodiment, the storage case O ring 23 is fit in the storage case seal groove 221 provided on one end portion of the storage case 22. An object of the storage case O ring 23 is to prevent cathode off-gas that has been introduced to the inside of the central body 11 from leaking into the first closing body 13. The central body O ring 12 is fit in the central body seal groove 113 provided on the other end portion of the central body 11. An object of the central body O ring 12 is to prevent cathode off-gas that has been introduced to the inside of the central body 11 from leaking into the second closing body 15.

On the other hand, in the reference mode, the O rings 23, 12 with similar functions are fit in the seal groves 221, 221 provided on both end portions of the storage case 22, as shown in Fig. 14.

In this reference mode, at the time of inserting the hollow fiber membrane module 2 inside the central body 11, the O ring 12 on the insertion side comes into contact with the inner wall surface of the central body 11. As a result, the O ring 12 on the insertion side causes a load against the insertion direction (hereinafter referred to as "insertion load") to act on the storage case 22.

In contrast, in the present embodiment, no O ring is fit in the insertion side of the storage case 22 as shown in Fig. 10, and therefore the insertion load does not act on the storage case 22 at the time of inserting the hollow fiber membrane module 2 inside the central body 11. In this way, the stress applied to the storage case 22 is reduced compared to the reference mode, and hence more gas inflow holes 222, 225, 227 and gas discharge holes 223 (hereinafter collectively referred to as "gas holes") can be formed in the side wall of the storage case 22. That is to say, an open area of the entire gas holes formed in the side wall of the storage case 22 can be increased. As a result, the flow rate of cathode off-gas flowing into the external flow channels 52 of the hollow fiber membrane bundle 21 can be increased, and hence the moisture exchange efficiency of the water recovery device 80 can be improved.

Furthermore, as the open area of the entire gas holes formed in the side wall of the storage case 22 can be increased, the diffusion wall 224 for causing diffusion of cathode off-gas can be formed in the left side wall of the storage case 22. That is to say, a desired moisture exchange efficiency can be achieved without forming the left gas inflow holes 225 across the entire left side wall. In this way, the housing 1, and ultimately the water recovery device 80, can be reduced in size and weight. At the same time, the cost can be reduced as well.

Moreover, in the present embodiment, as each of the O rings 12, 14, 16, 23 fills a gap with the inner wall surface of the central body 11, the O rings can be configured to have the same diameter by configuring the central body seal groove 113, the first closing body seal groove 133, the second closing body seal groove 153, and the storage case seal groove 221 to have the same total length. This allows for universal use of the O rings and cost reduction.

### (Second Embodiment)

A second embodiment of the present invention will now be described. The present embodiment differs from the first embodiment in that bypass ribs for forming a first bypass space 31 and a second bypass space 32 are provided to a central body 11. The following description will be given with a focus on this difference. It should be noted that, in the embodiment described below, the elements that are similar to those of the above-described first embodiment in terms of function are given the same reference signs thereas, and redundant descriptions are omitted as appropriate.

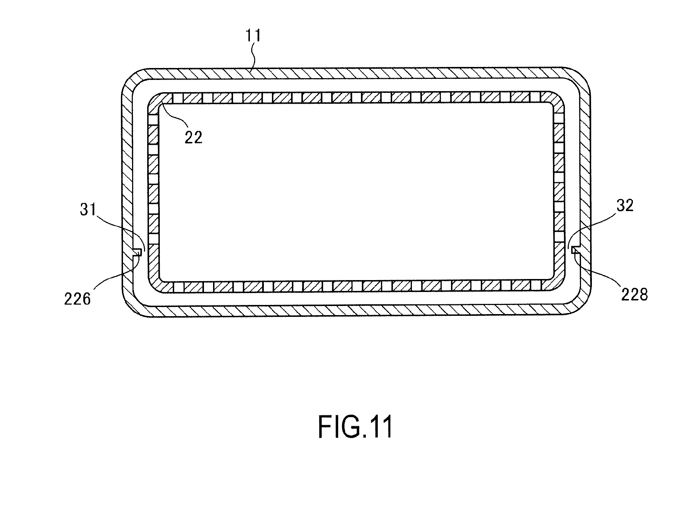

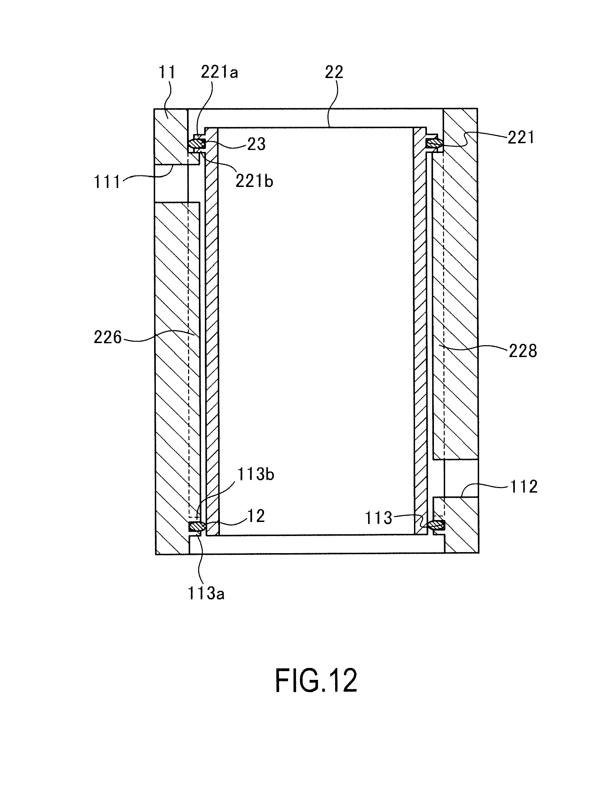

Fig. 11 shows a vertical cross section of a water recovery device 80 according to the present embodiment, and corresponds to Fig. 5 of the first embodiment. Fig. 12 shows a transverse cross section of the water recovery device 80 according to the present embodiment, and corresponds to Fig. 7 of the first embodiment.

As shown in Figs. 11 and 12, in the present embodiment, instead of forming bypass ribs on a storage case 22, a left bypass rib 226 is formed on an inner surface of a left side wall of the central body 11, and a right bypass rib 228 is formed on an inner surface of a right side wall of the central body 11.

By thus providing the left bypass rib 226 and the right bypass rib 228 on the central body 11, not only the effects similar to the effects of the first embodiment, but also the following effects can be achieved.

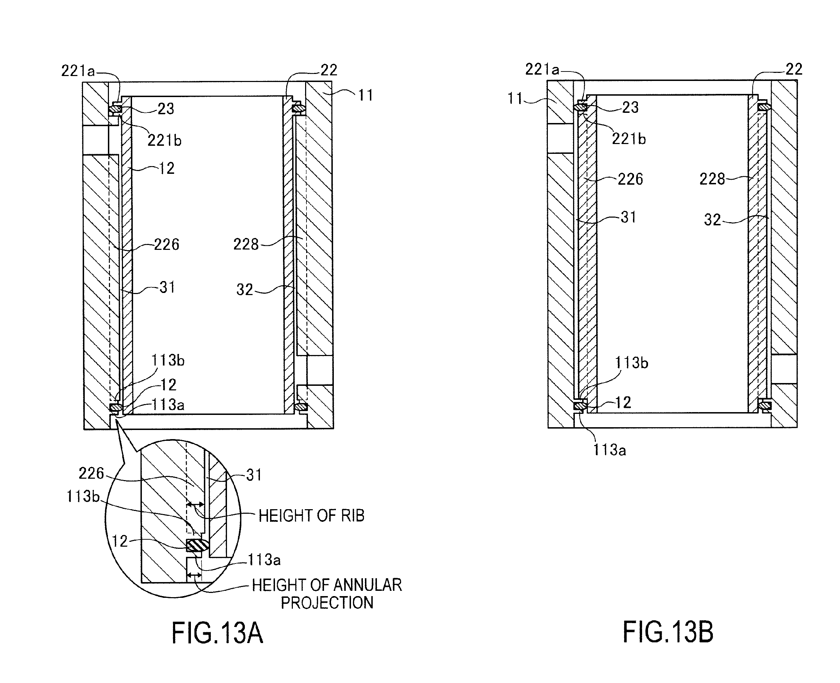

Fig. 13A is an explanatory diagram showing the effects of the water recovery device 80 according to the present embodiment. Specifically, Fig. 13A shows a transverse cross section of the water recovery device 80 according to the present embodiment. For comparison, a transverse cross section of the water recovery device 80 according to the first embodiment is shown in Fig. 13B.

When the left bypass rib 226 and the right bypass rib 228 are provided to the storage case 22 as in the first embodiment shown in Fig. 13B, it is necessary to set the height of the left bypass rib 226 and the right bypass rib 228 to be smaller than or equal to the height of the annular projections 221a, 221b formed on one end portion of the storage case 22 because the storage case O ring 23 tightly seals the inside of the central body 11. The height of the annular projections 221a, 221b is equal to the height of the annular projections 113a, 113b formed on the inner wall surface of the other end portion of the central body 11.

For this reason, it is impossible to reduce the size of the left bypass space 31 and the right bypass space 32, which are respectively a gap between the left bypass rib 226 and the inner wall surface of the central body 11 and a gap between the right bypass rib 228 and the inner wall surface of the central body 11, to a certain degree or more.

In contrast, by providing the left bypass rib 226 and the right bypass rib 228 to the central body 11 as in the present embodiment shown in Fig. 13A, the height of the left bypass rib 226 and the right bypass rib 228 can be set to be larger than or equal to the height of the annular projections 113a, 113b formed on the inner wall surface of the other end portion of the central body 11. The height of the annular projections 113a, 113b is set to be equal to the height of the annular projections 221a, 221b.

Therefore, the right bypass space 31 and the left bypass space 32 can be made smaller in the present embodiment than in the first embodiment. In this way, the flow rate of cathode off-gas that flows from left gas inflow holes 225, upper gas inflow holes 222, and right gas inflow holes 227 into external flow channels 52 of a hollow fiber membrane bundle 21 can be adjusted more broadly, and the moisture exchange efficiency of the water recovery device 80 can be further improved.

This concludes the description of the embodiments of the present invention. It should be noted that the above-described embodiments merely illustrate a part of application examples of the present invention, and are not intended to restrict a technical scope of the present invention to specific configurations according to the above-described embodiments.

For example, while cathode gas and cathode off-gas flow respectively in the internal flow channels 51 and the external flow channels 52 of the hollow fiber membrane bundle 21 in the present embodiments, cathode off-gas may flow in the internal flow channels 51 and the external flow channels 52.

The present application claims the benefit of priority from Japanese Patent Application No. 2012-56377, filed in the Japan Patent Office on March 13, 2012, the disclosure of which is incorporated herein by reference in its entirety.

## Claims

1. A water recovery device that allows a first gas to flow inside hollow fiber membranes and a second gas to flow outside the hollow fiber membranes, and that exchanges moisture between the first gas and the second gas, the water recovery device comprising:
a hollow fiber membrane bundle in which plural pieces of the hollow fiber membranes are bundled;
a storage case that is open at both ends and houses the hollow fiber membrane bundle thereinside;
a housing that includes an introduction hole and a discharge hole of the first gas and an introduction hole and a discharge hole of the second gas, and houses the storage case thereinside;
a storage case seal groove which is formed on an outer peripheral surface of one end side of the storage case and to which a seal member is attached for sealing a gap between the outer peripheral surface of the one end side of the storage case and an inner peripheral surface of the housing; and
a housing seal groove which is formed on the inner peripheral surface of the housing and to which a seal member is attached for sealing a gap between the inner peripheral surface of the housing and an outer peripheral surface of the other end side of the storage case.

2. The water recovery device according to claim 1, wherein
the housing further includes a projection that projects from an inner wall surface of the housing toward the storage case, and extends between the storage case seal groove and the housing seal groove.

3. The water recovery device according to claim 1 or 2, wherein
the housing further includes:
a central body that is open at both ends and accommodates the storage case thereinside;
a first closing body that closes one opening of the central body;
a second closing body that closes the other opening of the central body;
a first closing body seal groove which is formed in the first closing body and to which a seal member is attached for sealing a gap between an outer peripheral surface of the first closing body and an inner peripheral surface of the central body; and
a second closing body seal groove which is formed in the second closing body and to which a seal member is attached for sealing a gap between an outer peripheral surface of the second closing body and the
inner peripheral surface of the central body, and
the storage case seal groove, the housing seal groove, the first closing body seal groove, and the second closing body seal groove have the same total length.

4. The water recovery device according to any one of claims 1 to 3, wherein
the storage case includes:
a diffusion portion that causes diffusion of second gas that has been introduced from the introduction hole for second gas included in the housing; and
a gas inflow hole and a gas outflow hole, the gas inflow hole causing second gas to flow from a portion of a side surface into the hollow fiber membrane bundle such that second gas that has been diffused by the diffusion portion flows while intersecting with first gas flowing inside the hollow fiber membrane in the hollow fiber membrane bundle, and the gas outflow hole causing second gas that has flowed into the hollow fiber membrane bundle to flow out from a remaining portion of the side surface.
